# EUROPÄISCHE PATENTSCHRIFT

(11) **EP 2 881 604 B1**
(45) Veröffentlichungstag und Bekanntmachung des Hinweises auf die Patenterteilung: **13.07.2016**
(21) Anmeldenummer: 14187100.4
(22) Anmeldetag: 30.09.2014
(51) Int. Cl.: F16D 1/05, F16D 1/095

(54) **Befestigungsvorrichtung zum konzentrischen Befestigen einer Welle an eine Drehgeberwelle und Motorfeedback-System mit dieser Befestigung**
Fastening device for concentric fixing of a shaft on an encoder shaft and motor feedback system with such fastening
Dispositif de fixation destiné à la fixation concentrique d'un arbre sur un arbre d'encodeur et système de rétroaction de moteur doté d'une telle fixation

(30) Priorität: 06.12.2013 DE 102013113639
(43) Veröffentlichungstag der Anmeldung: 10.06.2015
(73) Patentinhaber: SICK STEGMANN GmbH, 78166 Donaueschingen (DE)
(72) Erfinder: Gao, Rick Xuezhong, 757438 Singapur (SG); Chan, Michelle, 757438 Singapur (SG); Lu, Decai, 757438 Singapur (SG)
(74) Vertreter: Ludewigt, Christoph

(56) Entgegenhaltungen:
- DE-A1-102011 013 887
- JP-A- H10 175 554
- US-A- 2 010 451

## Beschreibung

Die vorliegende Erfindung betrifft eine Befestigungsvorrichtung zum konzentrischen Befestigen einer Welle an eine Drehgeberwelle nach dem Oberbegriff des Anspruchs 1 und ein Motorfeedback-System mit solch einer Befestigungsvorrichtung.

Herkömmliche Befestigungen zwischen einer Welle, deren Drehungen mit einem Drehgeber erfasst werden sollen, und einer Drehgeberwelle des Drehgebers bestehen darin, dass die Wellen ineinander gesteckt und befestigt werden, wobei zum Befestigen der beiden Wellen unterschiedliche Befestigungsvorrichtungen bekannt sind. Eine der bekannten Befestigungsvorrichtungen besteht aus einem runden Klemmring, der mittels drei in Richtung der Wellenachse radial gerichteten Schrauben auf die Wellen montiert wird. Die beiden Wellen werden durch die Schrauben aufeinander gepresst, wobei keine konzentrische Befestigung der Wellen durch die unterschiedliche Druckkräfte der Schrauben und somit eine Versetzung der Wellen zueinander möglich ist.

Eine weitere Befestigungsvorrichtung ist aus der US 2004/0177587 A1 bekannt, bei der die Welle in die hohle Drehgeberwelle gefügt wird und beide Wellen durch einen Klemmring fixiert werden. Der Klemmring weist drei radial nach innen gerichtete Zapfen auf, so dass der Klemmring lediglich an den Stirnflächen der Zapfen mit der Drehgeberwelle in Kontakt kommt. Mit einer am Umfang des Klemmrings vorgesehenen und in Richtung einer Sekante weisenden Schraube kann der Klemmring festgeschraubt werden, so dass die drei Zapfen die beiden Wellen zueinander befestigen.

Hierbei besteht der Nachteil, dass beim Betätigen der in Richtung einer Sekante weisenden Schraube ein Verdrehen des Klemmringes zu den Wellen stattfinden kann und bei einer leichten Neigung des Klemmringes ein Abspringen derselben möglich ist.

DE 10 2011 013 887 A1 beschreibt eine Klemmkupplung entsprechend dem Oberbegriff des Anspruchs 1, wobei die Klemmkupplung drei radial gerichtete Schrauben zum Befestigen eines Klemm- bzw. Spannringes an eine Hohlwelle aufweist.

Es ist somit eine Aufgabe der vorliegenden Erfindung, eine Befestigungsvorrichtung zum konzentrischen Befestigen einer Welle mit einer Drehgeberwelle derart zu verbessern, dass eine stabile und einfache Befestigung der Wellen mit hoher Konzentrizität gewährleistet ist. Ferner ist es eine Aufgabe der vorliegenden Erfindung ein Motorfeedback-System derart zu verbessern, dass es kostengünstig und einfach montierbar ist und eine hohe Konzentrizität der Wellen aufweist.

Die Aufgabe wird erfindungsgemäß gelöst durch eine Befestigungsvorrichtung zum konzentrischen Befestigen einer Welle mit einer Drehgeberwelle, umfassend eine Wellenbuchse, die zwischen der Welle und der Drehgeberwelle angeordnet ist und einen Durchmesserunterschied zwischen den Wellen ausgleicht; und eine Spanneinheit, die die Wellenbuchse zu der Drehgeberwelle ausrichtet und die Wellenbuchse und die Drehgeberwelle an die Welle fixiert, wobei die Spanneinheit ein axial gerichtetes Ausrichtungsmittel zum Ausrichten der Spanneinheit und der Wellenbuchse zu der Drehgeberwelle und ein radial gerichtetes Fixiermittel zum Fixieren der Wellenbuchse, der Drehgeberwelle und der Welle aufweist.

Gemäß einem bevorzugten Ausführungsbeispiel der Befestigungsvorrichtung besteht die Wellenbuchse aus einem dünnwandigen Zylinder mit einem Flanschabschnitt an einem Ende oder aus einer zylindrischen Klemmhülse mit einem Flanschabschnitt und drei Klemmnuten an einem Ende.

Gemäß einem weiteren bevorzugten Ausführungsbeispiel besteht die Spanneinheit aus einem zylindrischen Ring, der an einer Stirnfläche eine erste Aussparung mit einer anschließenden axial verlaufenden Gewindebohrung und eine von einer Umfangfläche radial verlaufende Gewindebohrung aufweist; einer ersten Schraube, die in der axial verlaufenden Gewindebohrung vorgesehen ist und zum Ausrichten dient; und einer zweiten Schraube, die in der radial verlaufenden Gewindebohrung vorgesehen ist und zum Fixieren dient.

Dies hat den Vorteil, dass durch eine Betätigung der ersten Schraube die Drehgeberwelle, die Wellenbuchse und die Spanneinheit automatisch zueinander ausgerichtet werden, wodurch der Zusammenbau dieser drei Teile zur Vorbereitung der Befestigung mit der Welle ohne besondere Justage-Maßnahmen einfach durchgeführt werden kann.

Gemäß einem weiteren bevorzugten Ausführungsbeispiel weist die Spanneinheit eine am Innenumfang vorgesehene zweite Aussparung, die über die gesamte Höhe der Spanneinheit in axialer Richtung und entlang eines Teilstücks des Innenumfanges verläuft, und einen am Innenumfang und auf einer einem Drehgeber zugewandten Seite der Spanneinheit vorgesehenen ersten Absatz, der an beiden Seiten der zweiten Aussparung angrenzt, auf.

Gemäß einem weiteren bevorzugten Ausführungsbeispiel ist die zweite Aussparung derart ausgebildet, dass sie in einem montierten Zustand kontaktfrei zu der Drehgeberwelle ist.

Gemäß einem weiteren bevorzugten Ausführungsbeispiel ist an einer Stirnseite der Drehgeberwelle eine Einkerbung in axialer Richtung der Drehgeberwelle vorgesehen, so dass sich zwei Ecken an der Stirnseite bilden, wobei ein Abstand zwischen den beiden Ecken kleiner als ein Durchmesser der ersten Aussparung ist.

Gemäß einem weiteren bevorzugten Ausführungsbeispiel sind an einer Nut der zylindrischen Klemmhülse Aussparungen an den Seitenecken der sich gegenüberliegenden Klemmnuten vorgesehen, wobei die Aussparungen sich am äußeren Umfang der Klemmnuten befinden.

Gemäß einem weiteren bevorzugten Ausführungsbeispiel sind die an den Seitenecken der sich gegenüberliegenden Klemmnuten vorgesehenen Aussparungen formschlüssig mit einem Schraubenkopf der ersten Schraube ausgebildet, so dass im montierten Zustand der Schraubenkopf der ersten Schraube sich in den Aussparungen befindet und die Spanneinheit mit der Wellenbuchse verdrehfest fixiert.

Gemäß einem weiteren bevorzugten Ausführungsbeispiel sind die Ecken in radialer Richtung umbiegbar.

Gemäß einem weiteren bevorzugten Ausführungsbeispiel besteht das Ausrichtungsmittel aus der ersten Aussparung der Spanneinheit und der ersten Schraube, und das Fixiermittel besteht aus zwei an der zweiten Aussparung angrenzenden Endbereichen der Innenumfangwand der Spanneinheit und der zweiten Schraube.

Gemäß einem weiteren bevorzugten Ausführungsbeispiel sind die axial und radial verlaufenden Gewindebohrungen auf der Spanneinheit gegenüberliegend angeordnet. Dies hat den Vorteil, dass das Ausrichtungsmittel und das Fixiermittel keinen Winkelversatz zueinander aufweisen.

Gemäß einem weiteren bevorzugten Ausführungsbeispiel bewirkt das Fixiermittel eine nach innen gerichtete Drei-Punkt-Befestigung der Wellen, die durch das Ausrichtungsmittel verdrehfest ausgerichtet ist.

Gemäß einem weiteren bevorzugten Ausführungsbeispiel biegt bei einer Montage der Spanneinheit auf die Drehgeberwelle die erste Schraube die beiden Ecken der Einkerbung der Drehgeberwelle in die erste Aussparung um, so dass die Spanneinheit und die Drehgeberwelle zueinander ausgerichtet sind. Vorteilhafterweise stellt die Einkerbung an der Stirnseite der Drehgeberwelle eine Nullstellung des Drehgebers dar.

Dies hat den Vorteil, dass bei der Montage der Wellenbuchse, der Drehgeberwelle und der Spanneinheit eine konzentrische Ausrichtung der Teile bzgl. einer Nullstellung des Drehgebers auf einfache Weise erzielbar ist.

Die obige Aufgabe wird erfindungsgemäß auch gelöst durch ein Motorfeedback-System mit einem Antrieb, der eine Antriebswelle aufweist, und einem Drehgeber, der eine Drehgeberwelle aufweist, wobei die Antriebswelle und die Drehgeberwelle mittels einer Befestigungsvorrichtung nach einem der vorhergehenden Ansprüche 1 bis 14 zueinander ausgerichtet und miteinander fixiert sind.

Bevorzugte Ausgestaltungen und Weiterbildungen sowie weitere Vorteile der Erfindung sind den Unteransprüchen, der nachfolgenden Beschreibung und den Zeichnungen zu entnehmen.

Im Folgenden wird die Erfindung anhand von Ausführungsbeispielen unter Bezugnahme auf die Zeichnungen im Einzelnen erläutert. In den Zeichnungen zeigen:
- Fig. 1: eine schematische Explosionsdarstellung der Kernelemente einer erfindungsgemäßen Befestigungsvorrichtung;
- Fig. 2: eine schematische Darstellung der erfindungsgemäßen Befestigungsvorrichtung im montierten Zustand und ohne die Welle, deren Drehungen gemessen werden sollen;
- Fig. 3: eine schematische Schnittansicht der einzelnen Elemente der erfindungsgemäßen Befestigungsvorrichtung;
- Fig. 4: eine schematische Schnittansicht der Darstellung in der Figur 2;
- Fig. 5: eine Detailansicht einer Wellenbuchse der erfindungsgemäßen Befestigungsvorrichtung;
- Fig. 6: eine Detailansicht einer Spanneinheit der erfindungsgemäßen Befestigungsvorrichtung;
- Fig. 7 und 8: eine schematische Darstellung zum Vormontagevorgang;
- Fig. 9: eine schematische Schnittansicht eines Endmontagezustandes.

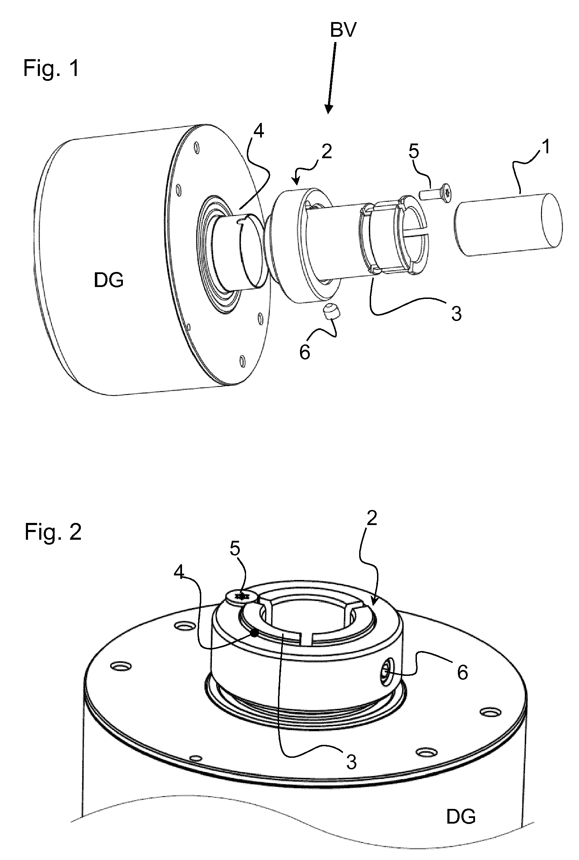

In Figur 1 ist eine schematische Explosionsdarstellung der Kernelemente einer erfindungsgemäßen Befestigungsvorrichtung BV zum konzentrischen Befestigen einer Welle 1 mit einer Drehgeberwelle 4 eines Drehgebers DG gezeigt.

Die Drehgeberwelle 4 bildet eine Hohlwelle, in die eine erfindungsgemäße Wellenbuchse 3 einsetzbar ist. Die Wellenbuchse 3 ist zwischen der Welle 1 und der Drehgeberwelle 4 angeordnet, so dass sie einen Durchmesserunterschied zwischen den Wellen 1, 4 ausgleichen kann. Ferner kann die Größe der Wellenbuchse 3 entsprechend den jeweiligen Durchmesserunterschieden zwischen der Welle 1 und der Drehgeberwelle 4 ausgewählt werden, so dass unterschiedliche Wellen 1 zu unterschiedlichen Drehgeberwellen 4 montiert werden können.

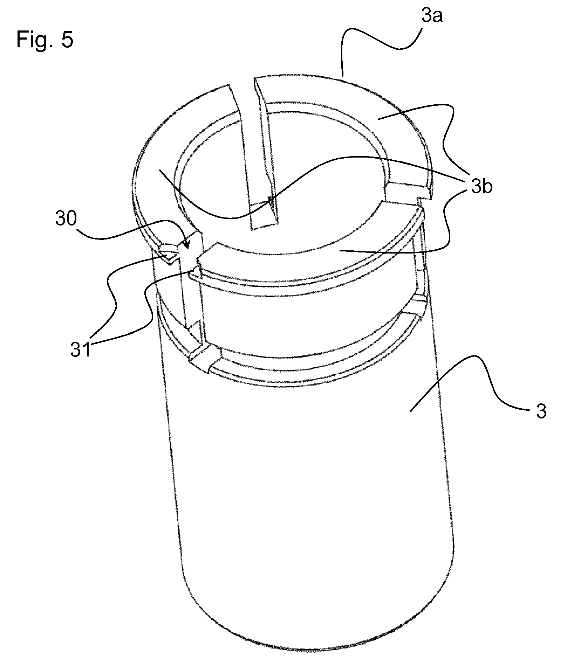

Die Wellenbuchse 3 besteht aus einem dünnwandigen Zylinder mit einem Flanschabschnitt 3a an einem Ende oder, wie in der Figur 5 gezeigt, aus einer zylindrischen Klemmhülse mit einem Flanschabschnitt 3a und drei Klemmnuten 3b an einem Ende. Hierbei sind an einer Nut 30 der zylindrischen Klemmhülse dritte Aussparungen 31 an den Seitenecken der sich gegenüberliegenden Klemmnuten 3b vorgesehen, wobei die dritten Aussparungen 31 sich am äußeren Umfang der Klemmnuten 3b befinden. Die an den Seitenecken der sich gegenüberliegenden Klemmnuten 3b vorgesehenen dritten Aussparungen 31 sind formschlüssig mit einem Schraubenkopf einer ersten in axialer Richtung der Klemmhülse gerichteten Schraube 5 ausgebildet, so dass im montierten Zustand der Schraubenkopf der ersten Schraube 5 sich in den dritten Aussparungen 31 befindet und die Spanneinheit 2 mit der Wellenbuchse 3 verdrehfest fixiert.

Eine aus einem zylindrischen Ring bestehende Spanneinheit 2 ist auf die Drehgeberwelle 4 aufsetzbar. Hierbei weist die Spanneinheit 2 ein axial gerichtetes Ausrichtungsmittel zum Ausrichten der Wellenbuchse 3 zu der Drehgeberwelle 4 und ein radial gerichtetes Fixiermittel zum Fixieren der Wellenbuchse 3, der Drehgeberwelle 4 und der Welle 1 auf. Der Flanschabschnitt 3a der Wellenbuchse 3 ist vorgesehen, um die Spanneinheit 2 auf der Drehgeberwelle 4 zu halten. Die erste in axialer Richtung der Wellenbuchse 3 gerichtete Schraube 5 ist zum Ausrichten der Spanneinheit 2, der Wellenbuchse 3 und der Drehgeberwelle 4 zueinander vorgesehen. Wenn die Welle 1 in die hohle Drehgeberwelle 4 eingesetzt ist, ist eine zweite in axialer Richtung der Spanneinheit 2 gerichtete Schraube 6 zum Fixieren der Wellen 1, 4 und der Wellenbuchse 3 vorgesehen.

In der Figur 2 sind die Spanneinheit 2, die Wellenbuchse 3, die Drehgeberwelle 4 und die erste und zweite Schraube 5, 6 ohne die Welle 1 in Vormontagezustand gezeigt. Ein solch derart vorbereiteter Drehgeber DG kann auf einfachste Weise auf die Welle 1 eines beliebigen Antriebs gesteckt und fixiert werden.

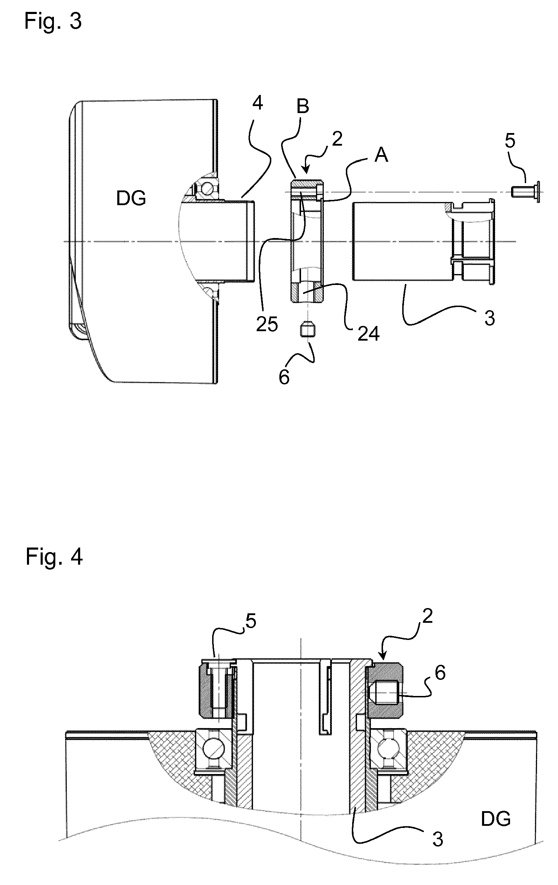

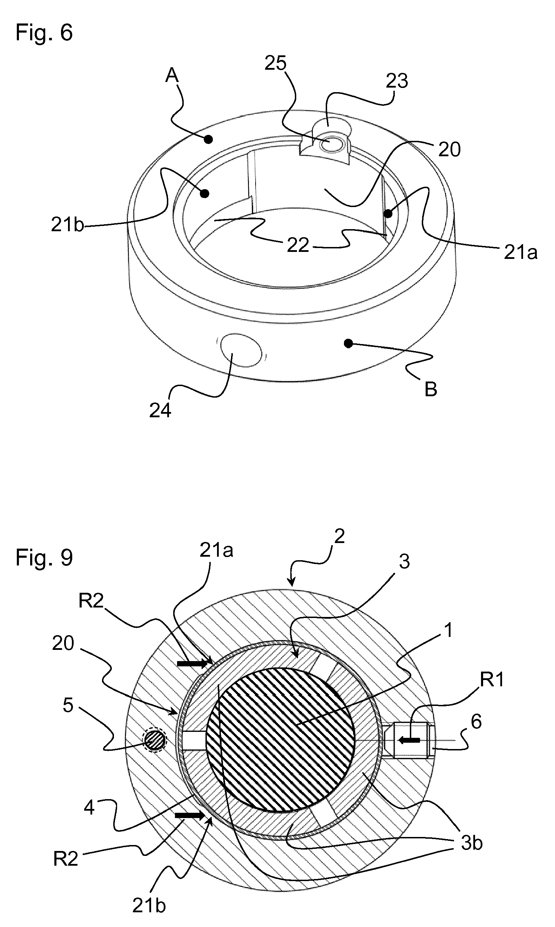

In der Figur 3 ist die beschriebene Explosionsdarstellung und in Figur 4 die Darstellung des Vormontagezustandes der Befestigungsvorrichtung BV als Schnittansicht dargestellt. Der zylindrische Ring der Spanneinheit 2 weist an einer Stirnfläche A eine erste Aussparung 23, die nachfolgend in der Figur 6 detaillierter dargestellt ist, mit einer anschließenden axial verlaufenden Gewindebohrung 25 und eine von einer Umfangfläche B radial verlaufende Gewindebohrung 24 auf.

Die erste Schraube 5 ist in der axial verlaufenden Gewindebohrung 25 vorgesehen und dient der Ausrichtung der Spanneinheit 2 und der Wellenbuchse 3 zu der Drehgeberwelle 4. Die zweite Schraube 6 ist in der axial verlaufenden Gewindebohrung 24 vorgesehen und dient der Fixierung der Wellen zu einander.

Somit besteht das Ausrichtungsmittel der Spanneinheit 2 aus der ersten Aussparung 23 der Spanneinheit 2 und der ersten Schraube 5.

Die Figur 6 zeigt eine Detailansicht des zylindrischen Rings der Spanneinheit 2 der erfindungsgemäßen Befestigungsvorrichtung BV, wobei die Spanneinheit 2, insbesondere der zylindrische Ring, eine am Innenumfang vorgesehene zweite Aussparung 20 aufweist, die über die gesamte Höhe der Spanneinheit 2 in axialer Richtung des Ringes und entlang eines Teilstücks des Innenumfanges des Ringes verläuft. Die Spanneinheit 2 weist ferner einen ersten Absatz 22 auf, der am Innenumfang und auf einer dem Drehgeber DG zugewandten Seite der Spanneinheit 2 vorgesehen ist und an beiden Seiten der zweiten Aussparung 20 angrenzt.

Die zweite Aussparung 20 ist derart ausgebildet, dass sie in einem montierten Zustand der Spanneinheit 2 auf der Drehgeberwelle 4 und mit der Wellenbuchse 3 kontaktfrei zu der Drehgeberwelle 4 ist. Hierdurch bilden sich zwei Endbereiche 21a, 21b der Innenumfangwand der Spanneinheit 2 an der zweiten Aussparung 20, die sich im Wesentlichen gegenüberliegend der radial verlaufenden Gewindebohrung 24 befinden.

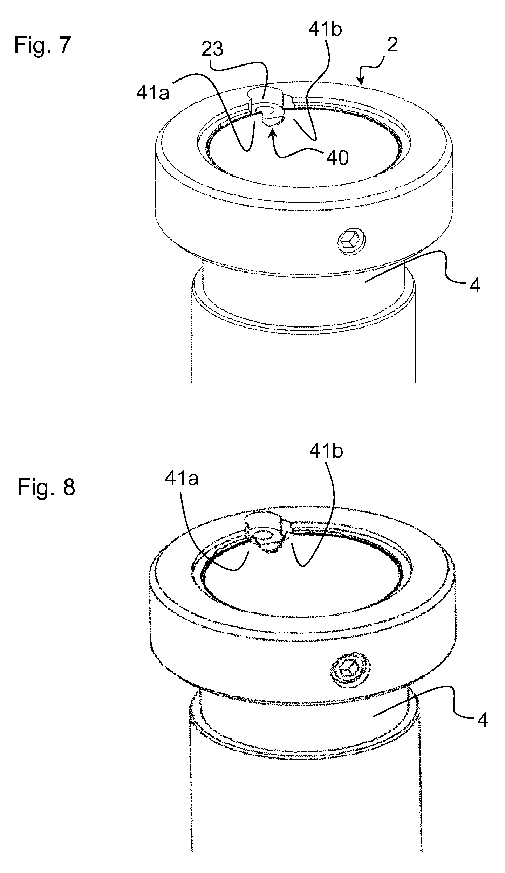

Anhand der Figuren 7 und 8 wird die Ausrichtung der Teile vor der endgültigen Fixierung beschrieben.

Hierbei ist an einer Stirnseite der Drehgeberwelle 4 eine Einkerbung 40 in axialer Richtung der Drehgeberwelle 4 vorgesehen, so dass sich zwei Ecken 41 a, 41 b an der Stirnseite bilden, wobei ein Abstand zwischen den beiden Ecken 41 a, 41 b kleiner als ein Durchmesser der ersten Aussparung 23 ist. Die Ecken 41 a, 41 b sind in radialer Richtung umbiegbar.

Die Einkerbung 40 an der Stirnseite der Drehgeberwelle 4 ermöglicht beim Aussetzen der Wellenbuchse 3 und der Spanneinheit 2 eine grobe Ausrichtung der Teile zueinander, indem die erste Aussparung 23 der Spanneinheit 2, die oben beschriebenen dritten Aussparungen 31 an den Seitenecken der Klemmnuten 3b der Wellenbuchse 3 und die Einkerbung 40 der Drehgeberwelle 4 fluchtend zueinander angeordnet werden.

Beim Zuschrauben der ersten Schraube 5 während der Vormontage der Spanneinheit 2 auf die Drehgeberwelle 4, bewirkt die erste Schraube 5 eine Verbiegung der beiden Ecken 41 a, 41 b der Einkerbung 40 in die erste Aussparung 23 des Ringes der Spanneinheit 2, wie in der Figur 8 angedeutet, da die Ecken 41a, 41b der Einkerbung 40 durch die Innenwand der Wellenbuchse 3 sich nur in diese Richtung verbiegen können. Dadurch sind die Spanneinheit 2, die Wellenbuchse 3 und die Drehgeberwelle 4 zueinander ausgerichtet.

Da die Einkerbung 40 an der Stirnseite der Drehgeberwelle 4 vorteilhafterweise eine Nullstellung des Drehgebers DG darstellt, sind bei dem Vormontagevorgang alle Teile zu der Nullstellung des Drehgebers DG ausgerichtet. Eine Inbetriebnahme des Drehgebers DG nach einer Montage an dem Antrieb ist somit auf einfachste Weise möglich.

Nach der Vormontage der Spanneinheit 2, der Wellenbuchse 3 und der Drehgeberwelle 4 sind die vormontierten und insbesondere ausgerichteten Teile auf die Welle 1 aufsetzbar und für die Endmontage bereit.

Eine Schnittansicht der erfindungsgemäßen Befestigungsvorrichtung BV in einem Endmontagezustand ist in der Figur 9 dargestellt. Hierbei ist die Spanneinheit 2 auf die hohle Drehgeberwelle 4 und die Wellenbuchse 3 aufgesetzt, wobei die erste Schraube 5 die Teile zueinander und auf die Nullstellung des Drehgeber DG ausgerichtet hat.

Bei einem Zuschrauben der zweiten Schraube 6 in eine dargestellte erste Pfeilrichtung R1 bewegt sich die Spanneinheit 2 entgegengesetzt zu der Bewegungsrichtung der zweiten Schraube 6 in eine zweite Pfeilrichtung R2. Dabei drücken die beiden Endbereiche 21a, 21b der Innenumfangwand der Spanneinheit 2 gegen die Drehgeberwelle 4, so dass die Drehgeberwelle 4 und die Wellenbuchse 3 sowie die Welle 1 sich in die gleiche Richtung R2 wie die Spanneinheit 2 bewegen. Dadurch werden die Welle 1, die Wellenbuchse 3 und die Drehgeberwelle 4 durch die Spanneinheit 2 konzentrisch ausgerichtet und gleichzeitig fixiert.

Die Fixierung der Wellen erfolgt somit durch die zwei an der zweiten Aussparung 20 angrenzenden Endbereichen 21a, 21b der Innenumfangwand der Spanneinheit 2 und die zweite Schraube 6. D. h. das Fixiermittel der Spanneinheit 2 besteht aus den beiden Endbereichen 21a, 21b der Innenumfangwand der Spanneinheit 2 und der zweiten Schraube 6.

Ferner bewirkt das Fixiermittel eine nach innen gerichtete Drei-Punkt-Befestigung der Wellen 1, 3, 4, die durch das Ausrichtungsmittel verdrehfest ist. Insbesondere werden die drei Klemmnuten 3b der Wellenbuchse 3 punktuell durch die zweite Schraube 6 und die beiden Endbereichen 21a, 21b der Innenumfangwand der Spanneinheit 2 radial nach innen gegen die Welle 1 gedrückt.

Erfindungsgemäß werden die dargestellten Welle 1, Wellenbuchse 3, Drehgeberwelle 4 und die Spanneinheit 2 bei einem Zusammenbau auf einfachste Weise zueinander und insbesondere zu einer Nullstellung des Drehgebers DG ausgerichtet und verdrehfest und konzentrisch fixiert.

**Bezugszeichenliste**

| | | | |
|---|---|---|---|
| 1 | Welle | A | Stirnfläche |
| 2 | Spanneinheit | B | Umfangsfläche |
| 3 | Wellenbuchse | BV | Befestigungsvorrichtung |
| 3a | Flanschabschnitt | DG | Drehgeber |
| 3b | Klemmnuten | R1, R2 | Pfeilrichtung |
| 4 | Drehgeberwelle | | |
| 5 | erste Schraube | | |
| 6 | zweite Schraube | | |
| 20 | zweite Aussparung | | |
| 21a, 21b | Endbereiche | | |
| 22 | erster Absatz | | |
| 23 | erste Aussparung | | |
| 24 | radial gerichtete Gewindebohrung | | |
| 30 | Nut | | |
| 31 | dritte Aussparungen | | |
| 40 | Einkerbung | | |
| 41a, 41b | Ecken der Einkerbung | | |

## Patentansprüche

1. Befestigungsvorrichtung (BV) zum konzentrischen Befestigen einer Welle (1) mit einer Drehgeberwelle (4), umfassend
eine Wellenbuchse (3), die zwischen der Welle (1) und der Drehgeberwelle (4) angeordnet ist und einen Durchmesserunterschied zwischen den Wellen ausgleicht; und
eine Spanneinheit (2), die die Wellenbuchse (3) zu der Drehgeberwelle (4) ausrichtet und die Wellenbuchse (3) und die Drehgeberwelle (4) an die Welle (1) fixiert,
wobei die Spanneinheit (2) ein radial gerichtetes Fixiermittel zum Fixieren der Wellenbuchse (3), der Drehgeberwelle (4) und der Welle (1) aufweist,
**dadurch gekennzeichnet, dass** die Spanneinheit (2) ein axial gerichtetes Ausrichtungsmittel zum Ausrichten der Spanneinheit (2) und der Wellenbuchse (3) zu der Drehgeberwelle (4) umfasst.

2. Befestigungsvorrichtung (BV) nach Anspruch 1, **dadurch gekennzeichnet, dass** die Wellenbuchse (3) aus einem dünnwandigen Zylinder mit einem Flanschabschnitt (3a) an einem Ende oder aus einer zylindrischen Klemmhülse mit einem Flanschabschnitt (3a) und drei Klemmnuten (3b) an einem Ende besteht.

3. Befestigungsvorrichtung (BV) nach Anspruch 1 und 2, **dadurch gekennzeichnet, dass** die Spanneinheit (2) aus einem zylindrischen Ring, der an einer Stirnfläche (A) eine erste Aussparung (23) mit einer anschließenden axial verlaufenden Gewindebohrung (25) und eine von einer Umfangfläche (B) radial verlaufende Gewindebohrung (24) aufweist; einer ersten Schraube (5), die in der axial verlaufenden Gewindebohrung (25) vorgesehen ist und zum Ausrichten dient; und einer zweiten Schraube (6), die in der radial verlaufenden Gewindebohrung (24) vorgesehen ist und zum Fixieren dient, besteht.

4. Befestigungsvorrichtung (BV) nach einem der vorhergehenden Ansprüche, **dadurch gekennzeichnet, dass** die Spanneinheit (2) eine am Innenumfang vorgesehene zweite Aussparung (20), die über die gesamte Höhe der Spanneinheit (2) in axialer Richtung und entlang eines Teilstücks des Innenumfanges verläuft, und einen am Innenumfang und auf einer einem Drehgeber (DG) zugewandten Seite der Spanneinheit (2) vorgesehenen ersten Absatz (22), der an beiden Seiten der zweiten Aussparung (20) angrenzt, aufweist.

5. Befestigungsvorrichtung (BV) nach Anspruch 4, **dadurch gekennzeichnet, dass** die zweite Aussparung (20) derart ausgebildet ist, dass sie in einem montierten Zustand kontaktfrei zu der Drehgeberwelle (4) ist.

6. Befestigungsvorrichtung (BV) nach Anspruch 3 oder einem der Ansprüche 4 bis 5 sofern rückbezogen auf Anspruch 3, **dadurch gekennzeichnet, dass** an einer Stirnseite der Drehgeberwelle (4) eine Einkerbung (40) in axialer Richtung der Drehgeberwelle (4) vorgesehen ist, so dass sich zwei Ecken (41 a, 41 b) an der Stirnseite bilden, wobei ein Abstand zwischen den beiden Ecken (41 a, 41 b) kleiner als ein Durchmesser der ersten Aussparung (23) ist.

7. Befestigungsvorrichtung (BV) nach zumindest einem der vorhergehenden Ansprüche, **dadurch gekennzeichnet, dass** an einer Nut (30) der zylindrischen Klemmhülse Aussparungen (31) an den Seitenecken der sich gegenüberliegenden Klemmnuten (3b) vorgesehen sind, und wobei die Aussparungen (31) sich am äußeren Umfang der Klemmnuten (3b) befinden.

8. Befestigungsvorrichtung (BV) nach Anspruch 3 oder einem der Ansprüche 4 bis 7 sofern rückbezogen auf Anspruch 3, **dadurch gekennzeichnet,**
**dass** die an den Seitenecken der sich gegenüberliegenden Klemmnuten (3b) vorgesehenen Aussparungen (31) formschlüssig mit einem Schraubenkopf der ersten Schraube (5) ausgebildet sind, so dass im montierten Zustand der Schraubenkopf der ersten Schraube (5) sich in den Aussparungen (31) befindet und die Spanneinheit (2) mit der Wellenbuchse (3) verdrehfest fixiert.

9. Befestigungsvorrichtung (BV) nach zumindest einem der vorhergehenden Ansprüche, **dadurch gekennzeichnet, dass** die Ecken (41 a, 41 b) in radialer Richtung umbiegbar sind.

10. Befestigungsvorrichtung (BV) nach Anspruch 4 oder einem der Ansprüche 5 bis 9 sofern rückbezogen auf Anspruch 4, **dadurch gekennzeichnet, dass** das Ausrichtungsmittel aus der ersten Aussparung (23) der Spanneinheit (2) und der ersten Schraube (5) besteht, und das Fixiermittel aus zwei an der zweiten Aussparung (20) angrenzenden Endbereichen (21a, 21b) der Innenumfangwand der Spanneinheit (2) und der zweiten Schraube (6) besteht.

11. Befestigungsvorrichtung (BV) nach Anspruch 3 oder einer der Ansprüche 4 bis 10 sofern rückbezogen auf Anspruch 3, **dadurch gekennzeichnet, dass** die axial und radial verlaufenden Gewindebohrungen (25, 24) auf der Spanneinheit (2) gegenüberliegend angeordnet sind.

12. Befestigungsvorrichtung (BV) nach zumindest einem der vorhergehenden Ansprüche, **dadurch gekennzeichnet, dass** das Fixiermittel eine nach innen gerichtete Drei-Punkt-Befestigung der Wellen bewirkt, die durch das Ausrichtungsmittel verdrehfest ausgerichtet ist.

13. Befestigungsvorrichtung (BV) nach Anspruch 3 oder einem der Ansprüche 4 bis 12 sofern rückbezogen auf Anspruch 3, **dadurch gekennzeichnet, dass** bei einer Montage der Spanneinheit (2) auf die Drehgeberwelle (4) die erste Schraube (5) die beiden Ecken (41a, 41b) der Einkerbung (40) der Drehgeberwelle (4) in die erste Aussparung (23) umbiegt, so dass die Spanneinheit (2) und die Drehgeberwelle (4) zueinander ausgerichtet sind.

14. Befestigungsvorrichtung (BV) nach Anspruch 6 oder einem der Ansprüche 7 bis 13 sofern rückbezogen auf Anspruch 6, **dadurch gekennzeichnet, dass** die Einkerbung (40) an der Stirnseite der Drehgeberwelle (4) eine Nullstellung des Drehgebers (DG) darstellt.

15. Motorfeedback-System mit einem Antrieb, der eine Antriebswelle (1) aufweist, und einem Drehgeber (DG), der eine Drehgeberwelle (4) aufweist, wobei die Antriebswelle (1) und die Drehgeberwelle (4) mittels einer Befestigungsvorrichtung (BV) nach einem der vorhergehenden Ansprüche 1 bis 14 zueinander ausgerichtet und mit einander fixiert sind.

## Claims

1. A fastening apparatus (BV) for a concentric fastening of a shaft (1) to a rotary encoder shaft (4), comprising
a shaft bushing (3) which is arranged between the shaft (1) and the rotary encoder shaft (4) and which compensates a diameter difference between the shafts; and
a clamping unit (2) which aligns the shaft bushing (3) with respect to the rotary encoder shaft (4) and which fixes the shaft bushing (3) and the rotary encoder shaft (4) to the shaft (1),
wherein the clamping unit (2) has a radially directed fixing means for fixing the shaft bushing (3), the rotary encoder (4) and the shaft (1),
**characterized in that** the clamping unit (2) comprises an axially directed alignment means for aligning the clamping unit (2) and the shaft bushing (3) with respect to the rotary encoder shaft (4).

2. A fastening apparatus (BV) in accordance with claim 1, **characterized in that** the shaft bushing (3) comprises a thin-walled cylinder having a flange section (3a) at an end or a cylindrical clamping sleeve having a flange section (3a) and three clamping grooves (3b) at an end.

3. A fastening apparatus (BV) in accordance with claim 1 and claim 2, **characterized in that** the clamping unit (2) comprises a cylindrical ring which has a first cut-out (23) having a subsequent axially extending threaded bore (25) at a front surface (A) and a threaded bore (24) extending radially from a peripheral surface (B); a first screw (5) which is provided in the axially extending threaded bore (25) and serves for the alignment; and a second screw (6) which is provided in the radially extending threaded bore (24) and serves for the fixing.

4. A fastening apparatus (BV) in accordance with any one of the preceding claims, **characterized in that** the clamping unit (2) has a second cut-out (20) which is provided at the inner periphery and which extends over the total height of the clamping unit (2) in the axial direction and along a segment of the inner periphery and has a first step (22) which is provided at a side of the clamping unit (2) facing a rotary encoder (DG) and which is adjacent to both sides of the second cut-out (20).

5. A fastening apparatus (BV) in accordance with claim 4, **characterized in that** the second cut-out (20) is formed such that it is without contact to the rotary encoder shaft (4) in an assembled state.

6. A fastening apparatus (BV) in accordance with claim 3 or with one of the claims 4 to 5 where dependent on claim 3, **characterized in that** a notch (40) is provided at a front side of the rotary encoder shaft (4) in the axial direction of the rotary encoder (4) such that two corners (41 a, 41 b) are formed at the front side, with a spacing between the two corners (41 a, 41 b) being smaller than a diameter of the first cut-out (23).

7. A fastening apparatus (BV) in accordance with at least one of the preceding claims, **characterized in that** cut-outs (31) are provided at the side corners of the oppositely disposed clamping grooves (3b) at a groove (30) of the cylindrical clamping sleeve; and **in that** the cut-outs (31) are located at the outer periphery of the clamping grooves (3b).

8. A fastening apparatus (BV) in accordance with claim 3 or with any one of the claims 4 to 7 where dependent on claim 3, **characterized in that** the cut-outs (31) provided at the side corners of the oppositely disposed clamping grooves (3b) are formed shape-matched with a screw head of the first screw (5) such that the screw head of the first screw (5) is located in the cut-outs (31) in the mounted state and fixes the clamping unit (2) to the shaft bushing (3) in a manner fixed against rotation.

9. A fastening apparatus (BV) in accordance with at least one of the preceding claims, **characterized in that** the corners (41 a, 41 b) can be bent over in the radial direction.

10. A fastening apparatus (BV) in accordance with claim 4 or with any one of the claims 5 to 9 where dependent on claim 4, **characterized in that** the alignment means consists of the first cut-out (23) of the clamping unit (2) and the first screw (5); and **in that** the fixing means consists of two end regions (21 a, 21 b) of the inner peripheral wall of the clamping unit (2) adjacent to the second cut-out (20) and the second screw (6).

11. A fastening apparatus (BV) in accordance with claim 3 or with any one of the claims 4 to 10 where dependent on claim 3, **characterized in that** the threaded bores (25, 24) extending axially and radially are arranged disposed opposite at the clamping unit (2).

12. A fastening unit (BV) in accordance with at least one of the preceding claims, **characterized in that** the fixing means effects an inwardly directed three-point fastening of the shafts which is aligned in a manner fixed against rotation by the alignment means.

13. A fastening apparatus (BV) in accordance with claim 3 or with any one of the claims 4 to 12 where dependent on claim 3, **characterized in that,** on an installation of the clamping unit (2) onto the rotary encoder shaft (4), the first screw (5) bends over the two corners (41 a, 41 b) of the notch (40) of the rotary encoder shaft (4) into the first cut-out (23) such that the clamping unit (2) and the rotary encoder shaft (4) are aligned with respect to one another.

14. A fastening apparatus (BV) in accordance with claim 6 or with any one of the claims 7 to 13 where dependent on claim 6, **characterized in that** the notch (40) at the front side of the rotary encoder shaft (4) represents a zero position of the rotary encoder (DG).

15. A motor feedback system having a drive which has a drive shaft (1) and having a rotary encoder (DG) which has a rotary encoder shaft (4), wherein the drive shaft (1) and the rotary encoder shaft (4) are aligned with respect to one another and are fixed to one another by means of a fastening apparatus (BV) in accordance with any one of the claims 1 to 14.

## Revendications

1. Dispositif de fixation (BV) pour la fixation concentrique d'un arbre (1) avec un arbre de capteur de rotation (4), comprenant
une douille d'arbre (3), qui est agencée entre l'arbre (1) et l'arbre de capteur (4) et qui compense une différence de diamètre entre les arbres ; et
une unité de serrage (2), qui aligne la douille d'arbre (3) par rapport à l'arbre de capteur (4) et qui fixe la douille d'arbre (3) et l'arbre de capteur (4) sur l'arbre (1),
dans lequel l'unité de serrage (2) comprend un moyen de fixation orienté radialement pour fixer la douille d'arbre (3), l'arbre de capteur (4) et l'arbre (1),
**caractérisé en ce que** l'unité de serrage (2) inclut un moyen d'alignement orienté axialement pour orienter l'unité de serrage (2) et la douille d'arbre (3) par rapport à l'arbre de capteur (4).

2. Dispositif de fixation (BV) selon la revendication 1, **caractérisé en ce que** la douille d'arbre (3) est constituée par un cylindre à paroi mince avec une portion en bride (3 a) à une extrémité, ou bien par un manchon de coincement cylindrique avec une portion en bride (3a) et trois gorges de coincement (3b) à une extrémité.

3. Dispositif de fixation (BV) selon la revendication 1 et 2, **caractérisé en ce que** l'unité de serrage (2) est constituée par une bague cylindrique, qui comporte au niveau d'une surface frontale (A) un premier évidement (23) avec un perçage taraudé (25) successif s'étendant axialement et avec un perçage taraudé (24) s'étendant radialement depuis une surface périphérique (B) ; une première vis (5), qui est prévue dans le perçage taraudé (25) s'étendant axialement et qui sert à l'alignement ; et une seconde vis (6), qui est prévue dans le perçage taraudé (24) s'étendant radialement et qui sert à la fixation.

4. Dispositif de fixation (BV) selon l'une des revendications précédentes, **caractérisé en ce que** l'unité de serrage (2) comporte un second évidement (20) prévu à la périphérie intérieure, qui s'étend sur la totalité de la hauteur de l'unité de serrage (2) en direction axiale et le long d'une partie de la périphérie intérieure, et un premier prolongement (22), prévu à la périphérie intérieure et sur un côté de l'unité de serrage (2) tourné vers un capteur de rotation (DG), qui est adjacent sur les deux côtés du second évidement (20).

5. Dispositif de fixation (BV) selon la revendication 4, **caractérisé en ce que** le second évidement (20) est réalisé de telle façon que, dans une situation montée, il n'est pas en contact avec l'arbre du capteur de rotation (4).

6. Dispositif de fixation (BV) selon la revendication 3 ou l'une des revendications 4 à 5 prise en dépendance de la revendication 3,
**caractérisé en ce qu'**une encoche (40) est prévue sur une face frontale de l'arbre du capteur de rotation (4) en direction axiale de l'arbre de capteur (4), de sorte qu'il se forme deux coins (41a, 41b) au niveau de la face frontale, et une distance entre les deux coins (41a, 41b) est plus petite qu'un diamètre du premier évidement (23).

7. Dispositif de fixation (BV) selon l'une au moins des revendications précédentes, **caractérisé en ce qu'**il est prévu des évidements (31) au niveau d'une gorge (30) de la douille de coincement cylindrique, au niveau des coins latéraux des gorges de coincement (3b) mutuellement opposées, et dans lequel les évidements (31) se trouvent à la périphérie extérieure des gorges de coincement (3b).

8. Dispositif de fixation (BV) selon la revendication 3 ou l'une des revendications 4 à 7 prise en dépendance de la revendication 3,
**caractérisé en ce que** les évidements (31) prévus au niveau des coins latéraux des gorges de coincement (3b) mutuellement opposées sont réalisés à coopération de formes avec une tête de la première vis (5), de sorte que, dans la situation montée, la tête de la première vis (5) se trouve dans les évidements (31) et fixe l'unité de serrage (2) solidairement en rotation avec la douille d'arbre (3).

9. Dispositif de fixation (BV) selon l'une au moins des revendications précédentes, **caractérisé en ce que** les coins (41a, 41b) sont susceptibles d'être recourbés en direction radiale.

10. Dispositif de fixation (BV) selon la revendication 4 ou l'une des revendications 5 à 9 prise en dépendance de la revendication 4,
**caractérisé en ce que** le moyen d'alignement est constitué par le premier évidement (23) de l'unité de serrage (2) et par la première vis (5), et le moyen de fixation est constitué par deux zones terminales (21a, 21b), adjacentes au second évidement (20), de la paroi périphérique intérieure de l'unité de serrage (2) et par la seconde vis (6).

11. Dispositif de fixation (BV) selon la revendication 3 ou l'une des revendications 4 à 10 prise en dépendance de la revendication 3,
**caractérisé en ce que** les perçages taraudés (25, 24) s'étendant axialement et radialement sont agencés à l'opposé sur l'unité de serrage (2).

12. Dispositif de fixation (BV) selon l'une au moins des revendications précédentes, **caractérisé en ce que** le moyen de fixation provoque une fixation des arbres en trois points et dirigée vers l'intérieur, qui est aligné solidairement en rotation par le moyen d'alignement.

13. Dispositif de fixation (BV) selon la revendication 3 ou l'une des revendications 4 à 12 prise en dépendance de la revendication 3,
**caractérisé en ce que** lors d'un montage de l'unité de serrage (2) sur l'arbre de capteur de rotation (4), la première vis (5) recourbe les deux coins (41a, 41b) de l'encoche (40) de l'arbre de capteur (4) vers l'intérieur du premier évidement (23), de sorte que l'unité de serrage (2) et l'arbre de capteur (4) sont mutuellement alignés.

14. Dispositif de fixation (BV) selon la revendication 6 ou l'une des revendications 7 à 13 prise en dépendance de la revendication 6,
**caractérisé en ce que** l'encoche (40) au niveau de la face frontale de l'arbre de capteur (4) représente une position du point zéro du capteur de rotation (DG).

15. Système de rétroaction pour moteur, avec un entraînement qui comprend un arbre d'entraînement (1) et un capteur de rotation (DG) qui comprend un arbre de capteur de rotation (4), dans lequel l'arbre d'entraînement (1) et l'arbre de capteur (4) sont alignés l'un avec l'autre et fixés l'un à l'autre au moyen d'un dispositif de fixation (BV) selon l'une des revendications précédentes 1 à 14.
